# EUROPEAN PATENT APPLICATION

(11) **EP 2 660 373 A2**
(43) Date of publication of application: **06.11.2013**
(21) Application number: 11852801.7
(22) Date of filing: 28.12.2011
(51) Int. Cl.: D01F 6/70, D01D 5/04

(54) **POLYURETHANE FIBER HAVING SUPERIOR ADHESIVE FORCE BETWEEN FILAMENTS IN MULTI-FILAMENT ELASTIC FIBER AND METHOD FOR MANUFACTURING SAME**

(30) Priority: 29.12.2010 KR 20100138348
(71) Applicant: Hyosung Corporation, Mapo-gu, Seoul 121-020 (KR)
(72) Inventor: JEONG, Ho Young, Anyang-si Gyeonggi-do 431-080 (KR); KANG, Yeon Soo, Gunpo-si Gyeonggi-do 435-040 (KR)
(74) Representative: reuteler & cie SA
(86) International application number: PCT/KR2011/010262
(87) International publication number: WO 2012/091466

(57) **Abstract**

The present invention relates to a polyurethane resin composition and a polyurethane fiber manufactured by using same, and more particularly, to a polyurethane resin composition containing dialkyl sulfosuccinate, a polyurethane fiber having superior adhesive force between filaments in a multi-filament elastic fiber which is manufactured by using same, and to a method for manufacturing same.

## Description

### Technical Field

The present invention relates to a polyurethane fiber, and more particularly, to an elastic multifilament polyurethane fiber, which contains dialkyl sulfosuccinate as an additive and has excellent adhesion between filaments, and a method for manufacturing the same.

### Background Art

Generally, elastic polyurethane urea fiber is obtained by reacting polyol, which is, high-molecular-weight diol compound, with an excess of a diisocyanate compound to obtain a prepolymer (first polymer reactant) having isocyanate groups at both ends of the polyol, dissolving the prepolymer in a suitable solvent, adding a diamine- or diol-based chain extender, reacting the mixture with a chain terminator such as monoalcohol or monoamine to obtain polyurethane urea spinning solution, and dry- or wet-spinning the polyurethane urea.

Elastic polyurethane urea fiber is used in various applications because of its inherent characteristics such as excellent elasticity and resilience, and the range of application thereof has continued to increase, and thus elastic polyurethane urea fiber having new additional characteristics has been required.

Elastic fiber is used in swimsuits, inner wears, outwears, stockings, diapers and the like and is used in knitted fabrics together with nylon, polyester or the like according to the intended use. When an elastic fiber consisting of multi-filaments has low adhesion between the filaments, the convergence of the filaments can be reduced due to friction in a knitting machine, resulting in yarn breakage or a stripe on the fabric.

### Disclosure

### Technical Problem

Accordingly, the present invention has been made in order to solve the above-described problems occurring in the prior art, and an object of the present invention is to provide an elastic fiber having excellent adhesion between filaments as a result of adding dialkyl sulfosuccinate to a polyurethane polymer.

### Technical Solution

The present invention provides an elastic multifilament polyurethane fiber having excellent adhesion between filaments, the fiber comprising 0.01 to 10 wt% of a dialkyl sulfosuccinate represented by the following formula 1: 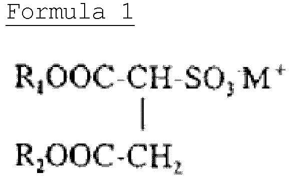 wherein R₁ and R₂ are the same or different and are each independently hydrogen or an alkyl group having 1 to 30 carbon atoms, and M⁺ is an H⁺, Li⁺, Na⁺, K+ or NH4⁺ cation.

The present invention also provides a method for manufacturing an elastic multifilament polyurethane fiber having excellent adhesion between filaments, the method comprising the steps of: reacting organic diisocyanate with diol to prepare a polyurethane precursor, dissolving the polyurethane precursor in an organic solvent to obtain a polyurethane precursor solution, and reacting the polyurethane precursor solution with diamine and monoamine to prepare a polyurethane solution; and adding dialkyl sulfosuccinate to the polyurethane solution in an amount of 0.01 to 10 wt% based on the weight of a polyurethane polymer to obtain a mixture, and spinning the mixture.

### Advantageous Effects

Spandex according to the present invention can provide an elastic yarn which has excellent adhesion between filaments while maintaining the characteristic properties of polyurethane, such as whiteness, gripping force, tear strength, bursting strength, and elasticity.

### Mode for Invention

Hereinafter, the present invention will be described in further detail.

A spandex fiber according to an embodiment of the present invention comprises dialkyl sulfosuccinate in an amount of 0.01 to 10 wt% based on the weight of a polyurethane polymer. This spandex fiber improved adhesion between filaments while maintaining the characteristic properties of polyurethane, and thus can be applied to various clothing, including inner wear, sportswear, and daywear.

A spandex according to the present invention is a fiber manufactured from fiber forming substance, which is a long-chain synthetic polymer comprising at least 85 wt% of a segmented polyurethane. Specifically, the polymer which is spun into the spandex fiber is a copolymer including a urethane bond. The polyurethane polymer that is used to manufacture the spandex is prepared by reacting organic diisocyanate with polymer diol to prepare a polyurethane precursor, dissolving the polyurethane precursor in an organic solvent, and then reacting the polyurethane precursor with diamine and monoamine.

Examples of the organic diisocyanate that is used in the present invention include diphenylmethane-4,4'-diisocyanate, hexamethylene diisocyanate, toluene diisocyanate, butylene diisocyanate, hydrogenated diphenylmethane-4,4'- diisocyanate, methylene-bis(4-phenylisocyanate), 2,4-tolylene diisocyanate, methylene-bis(4-cyclohexylisocyanate), isophorone diisocyanate, tetramethylene-p-xylylene diisocyanate, and mixtures thereof.

Examples of the polymer diol that is used in the present invention include polytetramethylene ether glycol, polypropylene glycol, polycarbonate diol and the like. The diamine that is used in the present invention serves as a chain extender, and examples thereof include ethylene diamine, propylene diamine, hydrazine, 1,4-cyclohexanediamine, hydrogenated m-phenylenediamine (HPMD), 2-methylpentamethylenediamine (MPMD) and the like. Preferably, the chain extender is one or more of ethylene diamine, 1,3-propylenediamine and 1,4-cyclohexanediamine, which are optionally mixed with HPMD, MPMD and/or 1,2-propylenediamine. Meanwhile, the monoamine that is used in the present invention serves as a chain terminator, and examples thereof include diethylamine, monoethanolamine, dimethylamine and the like.

The dialkyl sulfosuccinate that is used in the present invention is represented by the following formula 1 and is mixed with a polyurethane solution in an amount of 0.01 to 10 wt%, and more preferably 0.5-5 wt%, particularly before spinning the polyurethane solution to manufacture a polyurethane fiber. If the dialkyl sulfosuccinate is used in an amount of less than 0.01 wt%, the adhesion between filaments will be insufficient, and if the dialkyl sulfosuccinate is used in an amount of more than 10 wt%, secondary bonds in the polyurethane polymer will increase to change the characteristic properties of the polyurethane polymer. 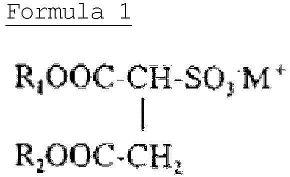 wherein R₁ and R₂ are the same or different and are each independently hydrogen or an alkyl group having 1 to 30 carbon atoms, and preferably 4 to 18 carbon atoms, and M⁺ is an H⁺, Li⁺, Na⁺, K⁺ or NH4⁺ based cation.

Examples of the dialkyl sulfosuccinate of formula 1 include sodium diisobutyl sulfosuccinate, sodium dioctyl succinate, sodium dihexyl sulfosuccinate, sodium diamyl sulfosuccinate, and sodium dicyclohexyl sulfosuccinate. More preferably, the dialkyl sulfosuccinate is sodium dioctyl sulfosuccinate or sodium dihexyl sulfosuccinate.

Hereinafter, the present invention will be described in further detail with reference to examples. It is to be understood, however, that these examples are for illustrative purposes only and are not intended to limit the scope of the present invention.

The physical properties of a polyurethane yarn that is mentioned in Examples and Comparative Examples below were measured in the following manner.

### ○ Tenacity and elongation: measured for a 10-cm sample at a tensile rate of 100 cm/min using a MEL device.

Herein, tenacity and elongation at breakage were measured, and the 200% modulus of the yarn, that is the load on the yarn upon increasing the yarn by 200%, was also measured.

### ○ Maximum draw ratio (Max DR)

A first roller was set at 50 rpm, power of the second roller is switched off, and third and fourth rollers were set at 200 rpm and 180 rpm, respectively. A yarn was wound once on the first roller and was passed through the second roller and wound eight times on the third roller. The yarn was not passed through a ceramic guide. After setting as described above, whether yarn breakage occurred was examined for 1 minute. 1 minute after no yarn breakage occurred, the number of revolutions of the third and fourth rollers was increased by 2 rpm. If yarn breakage occurred at 216 rpm on the third roller after 30 seconds, 215 was taken as the value of the yarn, and if yarn breakage occurred before 30 seconds, 214 was taken. In the case of the value of 215, Max DR was calculated to be 215/50. A higher Max DR value indicates a higher elongation.

### ○ Adhesion between filaments

This category is for measuring the adhesion between the filaments of the yarn. A filament was separated from the yarn by a fingertip, and when the length of the filament was about 1 cm or more, the filament was applied to a measurement device (LENZING, PODYN 400; a device for measuring the tensile strength of a fiber of a staple yarn). When a certain load was reached, the load was determined to be the adhesion value between the filaments. Generally, the load value is read within 30 seconds.

Because the range of error of measurement was great, the measurement was performed 10 times, and the values excluding the maximum and minimum values were averaged.

### o Adhesion between filament and metal

The adhesion between yarn filaments was measured by examining the filaments splitting due to friction during knitting. Because tension during an operation causes yarn breakage, the adhesion between filaments is an important item that should be controlled as the denier increases.

Five yarn samples, each having a length of 30 cm, were prepared and attached to a friction adhesion apparatus. In a state in which the five samples were placed at the same stretch ratio, the yarn samples were applied to the respective knitting needles, and the knitting needles were reciprocated five times to apply the same friction to the five yarn samples. After the five reciprocating motions, the side of each of the yarn samples to which friction has been applied was examined, and if splitting of the filaments on the side was not observed in all the five yarn samples, five reciprocating motions of the knitting needles were further performed. Then, if splitting of the filaments was observed in any one of the five samples, the adhesion of the yarn against friction was determined to be 10 times. Thus, the adhesion of the yarn against friction was the number of reciprocating motions of the knitting needles, and as the number of reciprocating motions increased, the adhesion filaments against friction was evaluated to be higher.

### Example 1

A polyol was prepared by mixing 2328 g of polytetramethylene ether glycol (molecular weight: 1800) with 518 g of 4,4'-diphenylmethane diisocyanate. The chain extender used was ethylenediamine and 1,2-diaminopropane, which were mixed at a molar ratio of 80 mole%:20 mole%. The chain terminator used was diethylamine. The chain extender and the chain terminator were used at a ratio of 10:1 and the used amine was prepared to have a total amine concentration of 7 mole%. The solvent used was dimethylacetamide. Based on the solid content of the polymer, 1.5 wt% of ethylene-bis(oxyethylene)bis-(3-(5-*t*-butyl-4-hydroxy-m-tolyl)-propionate), 0.5 wt% of 5,7-di-*t*-butyl-3-(3,4-dimethylphenyl)-3H-benzofuran-2-one, 1 wt% of 1,1,1'1'-tetramethyl-4,4'-(methylene-di-*p*-phenylene)-di-semicarbazide, 1 wt% of poly(N,N-diethyl-2-aminoethyl methacrylate), 0.1 wt% of titanium dioxide and 0.5 wt% of dioctyl sulfosuccinate were added as additives to the polyol and mixed to obtain a polyurethane urea spinning solution.

The spinning solution obtained as described above was dry-spun at a temperature of 270 °C at a speed of 900 m/min to manufacture a 3-filament polyurethane urea elastic yarn having 40 denier. The physical properties of the manufactured elastic yarn were evaluated, and the results of the evaluation are shown in Table 1 below.

### Example 2

A spinning solution was obtained in the same manner as described in Example 1, except that dioctyl sulfosuccinate was added in an amount of 1.0 wt%. The spinning solution was dry-spun at a temperature of 270 °C at a speed of 900 m/min to manufacture a 3-filament polyurethane urea elastic yarn having a diameter of 40 denier. The physical properties of the manufactured elastic yarn were evaluated, and the results of the evaluation are shown in Table 1 below.

### Example 3

A spinning solution was obtained in the same manner as described in Example 1, except that dioctyl sulfosuccinate was added in an amount of 2.0 wt%. The spinning solution was dry-spun at a temperature of 270 °C at a speed of 900 m/min to manufacture a 3-filament polyurethane urea elastic yarn having a diameter of 40 denier. The physical properties of the manufactured elastic yarn were evaluated, and the results of the evaluation are shown in Table 1 below.

### Example 4

A spinning solution was obtained in the same manner as described in Example 1, except that no dioctyl sulfosuccinate was added. The spinning solution was dry-spun at a temperature of 270 °C at a speed of 900 m/min to manufacture a 3-filament polyurethane urea elastic yarn having a diameter of 40 denier. The physical properties of the manufactured elastic yarn were evaluated, and the results of the evaluation are shown in Table 1 below.

**Table 1**

| | Tenacity (g/d) | Elongation (%) | 200% modulus (g) | Max DR | Adhesion (mg) between filaments | Adhesion (number) between filaments |
|---|---|---|---|---|---|---|
| Example 1 | 1.70 | 479 | 9.1 | 4.2 | 1,490 | 27.0 |
| Example 2 | 1.85 | 458 | 9.8 | 4.1 | 1,625 | 21.0 |
| Example 3 | 1.92 | 455 | 10.9 | 4.0 | 1,510 | 20.8 |
| Comparative Example 1 | 1.30 | 507 | 8.6 | 4.6 | 1,295 | 2.4 |

## Claims

1. An elastic multifilament polyurethane fiber having excellent adhesion between filaments, the polyurethane fiber comprising 0.01 to 10 wt% of a dialkyl sulfosuccinate corresponding to the following formula 1: 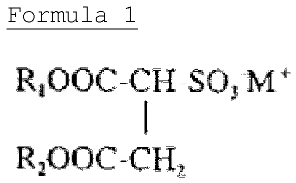 wherein R₁ and R₂ are the same or different and are each independent, and are an alkyl group having 1 to 30 carbon atoms or hydrogen, and M⁺ is an H⁺, Li⁺, Na⁺, K+ or NH4⁺ based cation.

2. The elastic multifilament polyurethane fiber of claim 1, wherein the dialkyl sulfosuccinate is based on a polymer or thermoplastic polyurethane comprising 85 wt% or more of a segmented polyurethane, that is finely dispersed in and on the surface of the fiber to be distributed therein and thereon, such that adhesion between filaments is increased.

3. A method for manufacturing an elastic multifilament polyurethane fiber having excellent adhesion between filaments, the method comprising the steps of: reacting organic diisocyanate with diol to prepare a polyurethane precursor, dissolving the polyurethane precursor in an organic solvent, and reacting the polyurethane precursor solution with diamine and monoamine to prepare a polyurethane solution; and
adding dialkyl sulfosuccinate to the polyurethane solution in an amount of 0.01 to 10 wt% based on the weight of a polyurethane polymer to obtain a mixture, and spinning the mixture.

4. A knitted mixed fabric manufactured using an elastic multifilament polyurethane fiber, which is manufactured by the method of claim 3 and has increased adhesion between filaments.
